# FASCICULE DE BREVET EUROPEEN

(11) **EP 4 126 627 B1**
(45) Date de publication et mention de la délivrance du brevet: **10.04.2024**
(21) Numéro de dépôt: 21711308.3
(22) Date de dépôt: 24.02.2021
(51) Int. Cl.: B61D 25/00, B60J 1/00, B32B 17/00

(54) **SYSTEME DE FIXATION D'UN VITRAGE LATERAL DE MOYEN DE TRANSPORT AVEC UN VERROU**
SYSTEM ZUM BEFESTIGEN EINER SEITENVERGLASUNG EINES TRANSPORTMITTELS MIT EINEM SCHLOSS
SYSTEM FOR FASTENING A SIDE GLAZING OF A MEANS OF TRANSPORT WITH A LOCK

(30) Priorité: 25.03.2020 FR 2002898
(43) Date de publication de la demande: 08.02.2023
(73) Titulaire: Saint-Gobain Glass France, 92400 Courbevoie (FR)
(72) Inventeur: GASTAL, Guillaume, 68-200 Zary (PL); BERTHOMME, Evelyne, 92500 Asnières Sur Seine (FR)
(74) Mandataire: Saint-Gobain Recherche
(86) Numéro de dépôt international: PCT/FR2021/050318
(87) Numéro de publication internationale: WO 2021/191517

(56) Documents cités:
- EP-A1- 1 529 708
- EP-A2- 0 398 077
- WO-A1-2019/228850
- DE-A1- 3 301 757

## Description

L'invention concerne la fixation d'un vitrage latéral d'un moyen de transport, et en particulier d'un vitrage de train, à une baie périphérique, généralement métallique, ledit vitrage étant un vitrage multiple, fixe. Ce type de vitrage est habituellement fixé à la baie du train en position verticale.

L'invention concerne plus particulièrement la fixation d'un vitrage latéral présentant une face extérieure qui fait face à un espace extérieur et une face intérieure qui fait face à un espace intérieur, ladite face extérieure du vitrage étant en continuité d'aspect avec une face extérieure ou un flanc extérieur de ladite baie sur toute sa périphérie. La continuité d'aspect ne signifie pas qu'il y a un contact entre la face extérieure du vitrage est la face extérieure de la baie car il est connu qu'il faut éviter un tel contact, surtout lorsque la baie est métallique ; la continuité d'aspect implique que, vue en coupe transversale verticale, la face extérieure de la baie est dans la continuité de la face extérieure du vitrage avec une distance non nulle entre elles.

Un tel vitrage multiple de moyen de transport, comprend habituellement :
- une vitre extérieure ayant une face extérieure qui fait face à un espace extérieur, une face intermédiaire à l'opposé de la face extérieure, ainsi qu'un chant périphérique,
- une vitre intérieure ayant une face intérieure qui fait face à un espace intérieur, une face intermédiaire à l'opposé de la face intérieure, ainsi qu'un chant périphérique,
- et une structure interne qui est située en périphérie interne de ladite vitre extérieure et en périphérie interne de ladite vitre intérieure en étant plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres.

Il est connu, notamment de la demande internationale de brevet N° WO 2019/228850, de prévoir qu'un vitrage multiple de moyen de transport comporte par ailleurs une structure de cadre de vitrage avec :
- une partie de cette structure qui est une structure interne et qui est située en périphérie interne de ladite vitre extérieure et en périphérie interne de ladite vitre intérieure en étant plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres, et
- une partie de cette structure qui est une structure externe et qui s'étend en périphérie externe de ladite vitre extérieure et/ou en périphérie externe de ladite vitre intérieure en étant plus loin que le chant périphérique respectivement de ladite vitre extérieure et/ou de ladite vitre intérieure en partant du centre de la vitre.

Une telle structure externe de vitrage est alors fixée mécaniquement et/ou chimiquement à la baie que le vitrage doit fermer.

Ainsi, dans ce document, la structure interne intègre l'espaceur 71 et le cordon de mastic 76 qui sont situés tous les deux en périphérie interne de la cavité de vitrage 8 et la structure externe intègre le cordon de colle 70 et le cadre 72.

Une autre solution de fixation d'un vitrage de moyen de transport est visible dans la demande internationale de brevet N° WO 2016/151256 : le vitrage est simplement collé par un cordon de colle périphérique, visible en noir sur les figures de ce document. Le document DE 33 01 757 A1 propose une autre solution de fixation, avec une structure interne comportant une cavité d'accrochage.

Les solutions de fixation de l'art antérieur par collage ou par fixation mécanique par cadre en deux parties ou encore par clame sont satisfaisantes dans la mesure ou le vitrage est correctement fixé mais nécessitent d'accéder à l'intérieur du moyen de transport lors de la fixation ; or cet accès peut être difficile. Cet accès difficile complexifie par ailleurs beaucoup le remplacement d'un tel vitrage au cours de la vie du moyen de transport.

Par ailleurs, en fin de vie du moyen de transport, ces solutions imposent des opérations complexes de démontage, de recyclage et de tri.

Le but de l'invention est de permettre de réaliser un vitrage multiple, fixe, et fixé à une baie de carrosserie de moyen de transport par l'extérieur, sans avoir besoin d'accéder à l'intérieur pour le remplacement.

Un autre but est de permettre de réaliser un tel vitrage sans prévoir de cadre rigide externe massif et notamment sans cadre en métal ou en alliage métallique, voire en élastomère ou silicone, externe au vitrage en lui-même et qui serait haut.

Le vitrage coûte alors moins cher et il est moins lourd.

Par ailleurs, ce cadre de structure externe diminue en général le clair de vitrage alors sa suppression, ou sa présence mais avec une hauteur en vis-à-vis de la vitre qui serait réduite, peut permettre d'augmenter ce clair de vitrage, pour une dimension de baie identique.

Enfin, l'éventuelle suppression du cadre de structure externe peut permettre de réaliser une baie moins profonde, et d'augmenter ainsi l'espace disponible à l'intérieur du moyen de transport.

L'invention repose ainsi sur le fait de prévoir au moins un verrou, et de préférence plusieurs verrous, et en particulier plusieurs verrous le long de chaque côté du vitrage, pour retenir mécaniquement et efficacement un vitrage multiple par la périphérie de la cavité de vitrage tout en protégeant efficacement ce ou ces verrous, afin de permettre de changer rapidement le vitrage, de préférence uniquement par l'extérieur.

Ainsi, au moins une prise, et de préférence une multitude de prises, est (ou sont) réalisée(s) directement dans le scellement du vitrage multiple et uniquement dans ce scellement, tout autour de la baie, sans autre fixation mécanique et un joint d'étanchéité est prévu pour protéger efficacement cette ou ces prises.

D'une manière surprenante, il a été constaté qu'il était possible de fixer ainsi un vitrage dans une baie périphérique, même pour un vitrage destiné à subir de nombreuses vibrations en raison de son usage comme vitrage d'un moyen de transport, et notamment d'un train.

L'invention a pour objet, dans son acception la plus large, un système de fixation d'un vitrage latéral d'un moyen de transport, en particulier un vitrage de train, à une baie périphérique, selon la revendication 1. Les revendications dépendantes présentent des caractéristiques avantageuses.

Ledit vitrage est un vitrage multiple, fixe, présentant une face extérieure qui fait face à un espace extérieur et une face intérieure qui fait face à un espace intérieur, ladite face extérieure du vitrage étant en continuité d'aspect avec une face extérieure de ladite baie sur toute sa périphérie, ledit vitrage comportant :
- une vitre extérieure ayant une face extérieure qui fait face à un espace extérieur, un chant périphérique et une face intermédiaire à l'opposé de la face extérieure, ladite vitre extérieure étant de préférence feuilletée et comprenant alors au moins une feuille de verre extérieure, une feuille de verre intérieure, ainsi qu'une feuille de matière plastique située entre ladite feuille de verre extérieure et ladite feuille de verre intérieure, chaque feuille de ladite vitre extérieure présentant un chant périphérique,
- une vitre intérieure, qui peut éventuellement être feuilletée, ayant une face intérieure qui fait face à un espace intérieur, une face intermédiaire à l'opposé de la face intérieure, ainsi qu'un chant périphérique,
- une structure interne qui est située en périphérie interne de ladite vitre extérieure et en périphérie interne de ladite vitre intérieure en étant au moins en partie plus vers le centre que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres.

Le vitrage selon l'invention est remarquable en ce que ladite structure interne comporte une cavité d'accrochage présentant un fond centripète et une ouverture centrifuge, en ce que ladite baie comporte un verrou qui est fixé à ladite baie et est situé plus centrifuge que le chant de ladite vitre intérieure. Ledit verrou présente une aile latérale s'étendant à l'intérieur de ladite cavité d'accrochage et en vis-à-vis d'un bord de ladite face intermédiaire de la vitre intérieure par rotation à 90° de ladite aile latérale. Un joint d'étanchéité extérieur, de préférence creux, est situé dans un espace d'applique entre d'une part ledit flanc extérieur et d'autre part le chant de ladite vitre extérieure ou d'autre part le chant de la feuille de verre extérieure. Ledit joint d'étanchéité extérieur est situé dans l'espace d'applique. Ce joint d'étanchéité extérieur est, de préférence, au contact d'un bord de ladite face intermédiaire de la vitre extérieure ou d'un bord d'une face intermédiaire de ladite feuille de verre extérieure, pour une meilleure étanchéité.

Ladite rotation à 90° peut être la rotation de ladite aile latérale seule sur elle-même ou la rotation du verrou complet sur lui-même.

Pour que le système de fixation soit suffisamment compact, chaque verrou comporte de préférence une aile latérale unique.

La rotation à 90° du verrou sur lui-même est de préférence réalisée par rotation autour de l'axe d'un trou de fixation qui a servi à la fixation du verrou. Le verrou est ainsi introduit dans un espace d'applique, qui est situé entre le vitrage et une traverse de baie adjacente, avec l'aile latérale orientée le long de cet espace, puis le verrou est tourné sur lui-même pour faire pénétrer l'aile latérale dans ladite cavité d'accrochage.

Le verrou fonctionne ainsi à la manière d'un loquet. C'est cette rotation qui permet dans un sens de fixer ou attacher le vitrage à la baie et dans le sens opposé de détacher le vitrage de la baie.

Ladite cavité d'accrochage est de préférence formée par une rainure localisée à l'endroit du verrou ou par un rail allongé ; chaque bord horizontal ou vertical du vitrage comporte alors de préférence un rail unique ; de préférence, il n'y a alors pas de rail dans les coins du vitrage.

Ladite cavité d'accrochage présente de préférence une profondeur, c'est-à-dire une distance entre son fond centripète et son ouverture centrifuge, comprise entre 2,0 et 15,0 mm, de préférence entre 3,0 et 10,0 mm. Cette distance est à la fois grande pour une bonne fixation du vitrage, c'est-à-dire un bon maintien de l'aile latérale dans la cavité d'accrochage et petite pour ne pas trop restreindre le clair de vitrage.

Afin d'avoir un système plus compact, il est possible que ladite rotation du verrou sur lui-même soit excentrée afin que ladite aile latérale s'éloigne d'un axe d'un trou de fixation du verrou lors du mouvement de la pénétration de ladite aile latérale dans ladite cavité d'accrochage.

De préférence, ladite structure interne ne dépasse pas en direction centrifuge plus loin que le chant de ladite vitre extérieure ou que le chant de ladite vitre intérieure et de préférence encore ladite structure interne ne dépasse en direction centrifuge plus loin que le chant de ladite vitre extérieure ni que le chant de ladite vitre intérieure.

Pour faciliter la fabrication du vitrage, ladite feuille de verre intérieure peut présenter des dimensions identiques (longueur, hauteur) aux dimensions de la vitre intérieure.

Ladite vitre intérieure peut elle-même être feuilletée mais alors, pour faciliter la fabrication, les feuilles constitutives de la vitre présentent de préférence des dimensions identiques (longueur, hauteur).

Dans une variante, le chant de ladite vitre extérieure ou le chant de ladite feuille de verre extérieure est situé en débord centrifuge du chant de ladite vitre intérieure le long d'une partie au moins de la longueur du chant de ladite vitre extérieure ou de ladite feuille de verre extérieure et de préférence le long de la totalité de la longueur du chant (c'est-à-dire le long de la totalité de la périphérie du chant) de ladite vitre extérieure ou de ladite feuille de verre extérieure.

Ledit débord est compris entre 5,0 et 30,0 mm, et de préférence entre 8,0 et 20,0 mm. Cela participe à la compacité de la fixation.

La notion de débord est utilisée en référence au centre de feuille de verre, de la vitre, ou du vitrage ; elle désigne un positionnement centrifuge, plus éloigné de ce centre, que ce qui est utilisé pour référence.

Dans une autre variante, indépendante, ledit chant de ladite feuille de matière plastique et/ou ledit chant de ladite feuille de verre intérieure est (ou sont) situé(s) en retrait centripète du chant de ladite vitre intérieure le long d'une partie au moins de la longueur du chant de ladite feuille de matière plastique et/ou de ladite feuille de verre intérieure et de préférence le long de la totalité de la longueur du chant (c'est-à-dire le long de la totalité de la périphérie du chant) de ladite feuille de matière plastique et/ou de ladite feuille de verre intérieure.

Ledit retrait est, de préférence, compris entre 1,0 et 10,0 mm, et de préférence encore entre 2,0 et 8,0 mm. Cela participe à la compacité de la fixation.

La notion de retrait est utilisée en référence au centre de feuille de verre, de la vitre, ou du vitrage ; elle désigne un positionnement centripète, plus proche de ce centre, que ce qui est utilisé pour référence.

La fabrication d'une vitre feuilletée (ici la vitre extérieure) dont les feuilles constitutives n'ont pas toutes des dimensions identiques (longueur, hauteur) est plus compliquée, mais les avantages procurés par ledit débord et/ou ledit retrait sont très importants : il(s) permet(tent) d'améliorer l'aspect du vitrage et la compacité de la fixation.

Ledit vitrage comprend de préférence un espaceur qui est situé entre ladite feuille de verre intérieure et ladite vitre intérieure, en retrait des chants de ladite feuille de verre intérieure et de ladite vitre intérieure tout en étant écarté, vu en coupe transversale, d'un écart plus en périphérie que la continuité transversale du chant de ladite feuille de verre extérieure, ledit écart étant compris entre 2,0 et 30,0 mm, et de préférence entre 5,0 et 20,0 mm, voire entre 6,0 et 15,0 mm.

Il est possible qu'une feuille de verre, plusieurs feuilles de verre, voire chaque feuille de verre ai(en)t subi un traitement chimique ou thermique destiné à le renforcer.

Au moins une feuille de matière plastique du vitrage, voire toutes les feuilles de matière plastique s'il y en a plusieurs, peut ou peuvent présenter en outre une capacité d'isolation phonique.

Dans un mode de réalisation particulier, le chant de ladite vitre extérieure ou le chant de ladite feuille de verre intérieure comporte une lèvre centrifuge en matière plastique. Cette lèvre participe à la protection du verrou situé plus à l'intérieur.

Le fait que ladite face extérieure du vitrage soit en continuité d'aspect avec ladite face extérieure de ladite baie sur toute sa périphérie implique une distance non nulle entre elles.

Cette distance entre ladite face extérieure du vitrage et ladite face extérieure de ladite baie est de préférence entre 5,0 et 25,0 mm et de préférence encore entre 8,0 et 15,0 mm, ce qui est très faible. Le corps du verrou présente de préférence un diamètre ou une hauteur identique à cette distance, afin de pouvoir être introduit dans l'espace d'applique. L'aile latérale du verrou présente de préférence une largeur identique à cette distance afin de pouvoir être introduite dans l'espace d'applique.

Le long de cette distance, de préférence, ledit joint d'étanchéité extérieur est présent au contact entre d'une part un bord de ladite face extérieure de la baie et d'autre part le chant de ladite vitre extérieure ou le chant de ladite feuille de verre extérieure lorsque la vitre extérieure est feuilletée, ledit joint d'étanchéité extérieur présentant de préférence une hauteur comprise entre 5,0 et 30,0 mm, et de préférence entre 8,0 et 20,0 mm. Cette faible distance permet d'obtenir un aspect visuel agréable et participe à l'obtention d'un clair de vitrage élevé.

Lorsqu'une lèvre centrifuge est présente, elle peut réaliser un fond pour le joint d'étanchéité extérieur afin de l'empêcher d'atteindre le verrou.

Le vitrage selon l'invention ne comporte, de préférence, aucun élément saillant vers l'extérieur, au-delà de la face extérieure dudit vitrage, qui est aussi la face extérieure de ladite vitre extérieure, afin de diminuer les frottements dans l'air pour le moyen de transport. Le vitrage peut alors être positionné en continuité d'aspect extérieur avec la baie de carrosserie, la face extérieure du vitrage étant à distance de la face extérieure de la baie.

Lorsque ledit joint d'étanchéité extérieur est situé dans la continuité entre ladite face extérieure du vitrage et ladite face extérieure de la baie, alors le vitrage peut être considéré affleurant visuellement avec la baie de carrosserie.

Un joint d'étanchéité intérieur est en outre, de préférence, présent au contact entre d'une part un flanc intérieur de la baie et d'autre part ladite face intérieure de la vitre intérieure.

Avantageusement, la présente invention permet ainsi de réaliser un vitrage multiple fixe, éventuellement à fenêtre ouvrable, dont la fixation est accessible de l'extérieur et qui présente une vue extérieure lisse, sans élément mécanique plus à l'extérieur que la face extérieure de la vitre extérieure.

Grâce à la fixation selon l'invention, le clair de vitrage est relativement grand ; il est, pour l'essentiel, définis par la position de l'espaceur.

La présente invention se rapporte aussi à l'utilisation d'au moins un verrou (et de préférence plusieurs verrous, notamment plusieurs verrous le long de chaque bord) à aile latérale pénétrant chacune dans ladite cavité d'accrochage par rotation à 90° du verrou sur lui-même pour la fixation d'un vitrage latéral d'un moyen de transport, en particulier un vitrage de train, à une baie périphérique.

Le système de fixation de vitrage selon l'invention est un système pour fixer un vitrage latéral d'un moyen de transport. C'est un système fiable, bien que le vitrage soit destiné à subir de nombreuses vibrations en raison de son utilisation comme vitrage latéral de moyen de transport.

Les détails et caractéristiques avantageuses de l'invention ressortent des exemples non limitatifs suivant, illustré à l'aide des figures ci-jointes pour lesquelles :
- la figure 1 illustre un schéma en perspective de l'extérieur d'une baie de carrosserie de train comportant un vitrage multiple qui est fixé à la baie grâce à un système de fixation selon l'invention, le système étant illustré sans joint d'étanchéité extérieur ;
- la figure 2 illustre un schéma en coupe transversale verticale en bas d'un vitrage fixé à une baie selon un premier mode de réalisation selon l'invention ;
- la figure 3 illustre le schéma du vitrage de la figure 2, seul ;
- la figure 4 illustre un schéma en coupe transversale verticale en bas d'un vitrage fixé à une baie selon un second mode de réalisation selon l'invention, le verrou étant vu en coupe partielle ;
- la figure 5 illustre un schéma en coupe transversale verticale en bas d'un vitrage fixé à une baie selon un troisième mode de réalisation selon l'invention, le verrou étant vu en coupe complète ;
- les figures 6 et 7 illustrent respectivement un schéma de côté et de face avant d'un verrou selon l'invention à rotation centrée ;
- les figures 8 et 9 illustrent respectivement un schéma de côté et de face avant d'un verrou selon l'invention à rotation excentrée ;
- la figure 10 illustre un schéma de face, par transparence, de l'extérieur, d'un verrou haut en position ouverte selon un mode particulier de réalisation du verrou selon l'invention à aile latérale distincte ;
- la figure 11 illustre un schéma de face, par transparence, de l'extérieur, du verrou de la figure 10 en position fermée ; et
- la figure 12 illustre un schéma en perspective, par transparence, de l'extérieur, du verrou de la figure 10 en position fermée.

Dans ces schémas, les proportions entre les dimensions des différents éléments ne sont pas respectées afin de faciliter leur lecture.

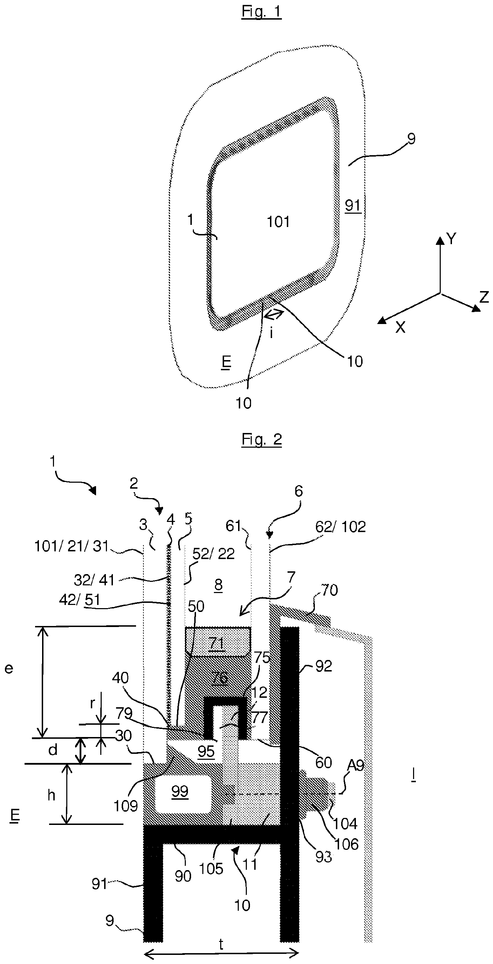

La figure 1 illustre un vitrage 1 latéral gauche selon l'invention d'un moyen de transport, ce vitrage étant positionné verticalement et fixé à une baie 9 de carrosserie de ce moyen de transport.

Il s'agit en particulier d'un vitrage latéral de train.

Ce vitrage réalise ainsi une séparation verticale entre un espace intérieure I qui est à l'intérieur du train et un espace extérieur E qui est à l'extérieur du train. La figure 1 est une vue schématique de l'extérieur.

Les notions de « extérieur » et « intérieur » sont donc considérées dans le présent document respectivement par rapport à cet espace extérieur E (ou orienté vers cet espace extérieur) et cet espace intérieur I (ou orienté vers cet espace intérieur).

Comme il s'agit d'un vitrage latéral, celui-ci s'étend pour l'essentiel selon l'axe généralement appelé « l'axe X » du moyen de transport, qui est l'axe longitudinal central d'avancé du moyen de transport équipé du vitrage selon l'invention en tant que vitrage latéral (ici du côté gauche) et qui correspond à l'axe X en figure 1. L'axe Y est l'axe vertical et l'axe Z est l'axe transversal.

Dans le cadre du présent document, la notion de « centripète » et celle de « centrifuge » est à considérer dans le plan de la feuille en figure 1, ou dans un plan général du vitrage lorsqu'il est considéré à plat, exprimé par rapport au centre du vitrage, selon les axes X et Y ; le sens centripète est en direction de ce centre alors que le sens centrifuge s'éloigne de ce centre.

Ce vitrage 1 est fixe. Il est d'un seul tenant, sans fenêtre ouvrable à l'intérieur comme cela est connu par exemple de la demande internationale de brevet N° WO 2016/042270 ; pour autant, bien que cela ne soit pas décrit en détail ici, l'invention pourrait s'appliquer à un tel vitrage à fenêtre ouvrable.

Ce vitrage 1 présente une face extérieure 101 qui fait face à l'espace extérieur E et une face intérieure 102 qui fait face à l'espace intérieur I.

Ce vitrage 1 comprend :
- une vitre extérieure 2 présentant une face extérieure 21 qui fait face à l'espace extérieur E, une face intermédiaire 22 à l'opposé de la face extérieure, ainsi qu'un chant périphérique 20,
- une vitre intérieure 6 présentant une face intérieure 62 qui fait face à l'espace intérieur I, une face intermédiaire 61 à l'opposé de la face intérieure, ainsi qu'un chant périphérique 60, et
- une structure interne 7 et qui tient ces deux vitres ensemble de telle sorte que le vitrage réalise la séparation entre l'espace extérieur et l'espace intérieur en réalisant une cavité de vitrage 8 qui est située entre les vitres 2, 6.

La structure interne 7 est qualifiée « interne » car elle est située en périphérie interne de la vitre extérieure 2 et en périphérie interne de la vitre intérieure 6 en étant au moins en partie (et de préférence en totalité) plus vers le centre (plus centripète) que le chant périphérique 20, 60 respectivement de la vitre extérieure 2 et de la vitre intérieure 6 ; c'est-à-dire que la structure interne 7 ne dépasse pas en direction centrifuge au-delà des chants périphériques 20, 60.

Les feuilles 3, 4, 5 et les vitres 2, 6 du vitrage 1 sont chacune d'un seul tenant.

La vitre intérieure 6 est une feuille de verre monolithique présentant une épaisseur comprise entre 3,0 et 8,0 mm, par exemple de 5,0 mm.

La vitre extérieure 2 est de préférence feuilletée et comprend alors, en partant de l'espace extérieur E : au moins une feuille de verre extérieure 3, une feuille de verre intérieure 5, ainsi qu'une feuille de matière plastique 4 située entre la feuille de verre extérieure 3 et la feuille de verre intérieure 5, chaque feuille 3, 4, 5 de la vitre extérieure 2 présentant un chant 30, 40, 50 périphérique.

La feuille de verre extérieure 3 présente une face extérieure 31 qui est orientée vers l'espace extérieur E, une face intercalaire 32 qui est orientée vers la feuille de matière plastique 4, intercalaire, avec le chant 30 périphérique situé entre ces deux faces.

La feuille de verre intérieure 5 présente une face intercalaire 51 qui est orientée vers la feuille de matière plastique 4, une face intérieure 52 qui est orientée vers la cavité de vitrage 8, avec le chant 50 périphérique situé entre ces deux faces.

La feuille de matière plastique 4 présente une face intercalaire extérieure 41 qui est orientée vers la face intercalaire 32 et qui est ici au contact de cette face intercalaire 32, une face intercalaire intérieure 42 qui est orientée vers la face intercalaire 51 et qui est ici au contact de cette face intercalaire 51, avec le chant 40 périphérique qui est situé entre ces deux faces intercalaires 41, 42.

La feuille de verre extérieure 3 est par exemple une feuille de verre présentant une épaisseur comprise entre 0,5 et 8,0 mm, par exemple de 6,0 mm.

La feuille de matière plastique 4 intercalaire est par exemple une feuille en polyvinylbutyral (PVB) présentant une épaisseur comprise entre 0,50 et 1,50 mm, par exemple de 0,76 mm. Cette feuille de matière plastique 4 présente de préférence les mêmes dimensions de longueur et de hauteur que la feuille de verre extérieure 3.

La feuille de verre intérieure 5 est une feuille de verre présentant une épaisseur comprise entre 0,5 et 8,0 mm, par exemple de 5,0 mm.

Ici, le vitrage 1 présente ainsi une épaisseur totale t' de 26,76 mm.

Le vitrage 1 est un vitrage fixe dans le sens où la structure interne 7 est destinée en outre à permettre de fixer le vitrage 1 à une structure 9 du moyen de transport (ici le train), sans possibilité de bouger par rapport à cette structure 9.

Le vitrage 1 est un vitrage multiple dans le sens où il comporte plusieurs vitres 2, 6 ainsi que la cavité de vitrage 8 qui est située entre les deux vitres 2, 6, cette cavité étant remplie d'air ou de gaz, de préférence neutre comme l'argon ou le krypton ; cette cavité participe à l'isolation thermique conférée par le vitrage 1.

La structure interne 7 permet ainsi de maintenir les deux vitres 2, 6 à distance l'une de l'autre, avec une distance constante entre les deux vitres 2, 6, ici de 10,0 mm.

La structure interne 7 comporte une cavité d'accrochage 77 présentant un fond 78 centripète et une ouverture 79 centrifuge.

Cette cavité d'accrochage 77 présente de préférence une profondeur p, c'est-à-dire une distance entre son fond 78, centripète et son ouverture 79, centrifuge, comprise entre 2,0 et 15,0 mm, de préférence entre 3,0 et 10,0 mm et ici de 7,0 mm.

La baie 9 comporte un flanc extérieur 91, orientée verticalement et tournée vers l'espace extérieure, un flanc intérieur 92, orientée verticalement et tournée vers l'espace extérieure, ces deux flancs étant reliés par une traverse 90, horizontale le long des bords horizontaux et verticale le long des bords verticaux. Bien que cela ne soit pas illustré, cette traverse peut aussi être oblique ou en croix. Cette liaison forme un espace d'applique 95, dans lequel le vitrage est positionné puis fixé lors de son installation dans la baie qu'il doit fermer.

La baie 9 est ainsi périphérique : elle fait tout le tour du vitrage 1.

La baie 9 comporte un verrou 10 qui est fixé, ou attaché, à la baie et est situé plus centrifuge que le chant 60 de la vitre intérieure 6. Ce verrou 10 présente une aile 12 latérale s'étendant à l'intérieur de la cavité d'accrochage 77 et en vis-à-vis d'un bord de la face intermédiaire 61 de la vitre intérieure 6 par rotation à 90° de l'aile 12 latérale afin de retenir le vitrage. Ce verrou, ou chaque verrou, permet à la fois de fixer le vitrage et à la fois de retirer ce vitrage lorsqu'il est nécessaire de le changer pour le remplacer par un autre vitrage, tout en conservant le(s) verrou(s) fixé(s) directement ou indirectement à la baie.

Comme visible plus particulièrement sur les figures 2 à 5, la structure interne 7 comporte des moyens pour créer et maintenir l'existence de la cavité de vitrage 8 et maintenir le vitrage à la baie et la structure interne 7 comprend :
- un espaceur 71, interne qui est situé entre la feuille de verre intérieure 5 et la vitre intérieure 6,
- un cordon de mastic 76, interne, situé entre la feuille de verre intérieure 5 et la vitre intérieure 6 plus en périphérique que l'espaceur 71,
- un rail 75, interne, allongé, en forme de U, s'étendant entre le bord de la face intermédiaire 22 et le bord de la face intermédiaire 61 et présentant ainsi un fond orienté vers la cavité de vitrage 8 et une ouverture orientée en direction opposée, afin de former la cavité d'accrochage 77, et
- éventuellement un cordon de colle, interne, pour coller le rail 75 d'une part en face intermédiaire 22 de la vitre extérieure 2 et d'autre part à la face intermédiaire 61 de la vitre intérieure 6.

De préférence, le rail 75, et ainsi la cavité d'accrochage 77, n'est pas en contact direct avec le bord de la face intermédiaire 22 et le bord de la face 61. Le rail 75 est, de préférence, noyé dans le cordon de colle.

Bien que cela ne soit pas illustré, à la place d'un rail allongé et présent tout le long de chaque bord du vitrage, il est possible de prévoir que ladite cavité d'accrochage soit formée par une rainure localisée à l'endroit de chaque verrou ; ainsi, entre deux rainures localisées, le cordon de mastic 76 remplit la totalité de l'espace entre d'une part l'espaceur 71 et d'autre part l'arête entre le chant 20, 60 et respectivement la face intermédiaire 22, 61.

L'espaceur 71 est situé en retrait des chants 50, 60 de la feuille de verre intérieure 5 et de la vitre intérieure 6, vers le centre du vitrage, tout en étant écarté, lorsque le vitrage est vu en coupe transversale, d'un écart e plus en périphérie que la continuité transversale du chant 60 de la vitre intérieure 6. Cet écart e est, de préférence, compris entre 10,0 et 50,0 mm, et de préférence encore entre 10,0 et 40,0 mm, voire entre 20,0 et 30,0 mm ; il est ici de 24,0 mm ; ce qui confère un claire de vitrage satisfaisant.

L'espaceur 71 peut être par exemple en matière plastique et/ou en métal et/ou en alliage métallique ; il permet de maintenir les deux vitres 2, 6 à une distance constante l'une de l'autre et de maintenir la cavité de vitrage 8.

L'espaceur 71 est maintenu en position contre la face intermédiaire 61 de la vitre intérieure 6 et contre la face intérieure 52 de ladite vitre intérieure 5 grâce au cordon de mastic 76.

Le vitrage 1 ne comprend pas de cadre, et notamment pas de cadre rigide métallique, qui maintiendrait les vitres 2, 6 respectivement à la fois par la face extérieure 21 et par la face intérieure 62.

Le flanc intérieur 92 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6. Il est de préférence préfabriqué puis collé contre le bord de la face intérieure 62.

Le cordon de mastic 76, à lui tout seul ou avec le cordon de colle, remplit de préférence tout le reste de l'espace à l'exception de l'espace réalisé par la cavité d'accrochage 77, et cela en direction transversale entre la face intermédiaire 61 de la vitre intérieure 6 et la face intermédiaire 22 de la vitre extérieure 2 et de préférence tout l'espace en hauteur entre d'une part l'espaceur 71 et d'autre part l'arête entre le chant 60 et la face intermédiaire 61.

Ledit cordon de colle peut comprendre ou être un cordon de colle à base de polyuréthane ou de silicone ou de MS polymère (c'est-à-dire de polyéther modifié silane) ou de polysulfide, afin que la liaison chimique avec au moins la vitre intérieure soit forte et de préférence que la liaison chimique avec les deux vitres de part et d'autre de la cavité de vitrage soit forte.

Le cordon de colle peut comprendre un profilé métallique qui est collé latéralement de chaque côté de la cavité de vitrage, avec un tel cordon de colle ou être en partie ou complètement intégré dans un tel cordon de colle.

Le cordon de colle pourrait comprendre un câble, et notamment un câble métallique, qui est collé latéralement sur un côté au moins de la cavité de vitrage, afin de permettre de faciliter la rupture de la vitre par traction sur ce câble.

Le flanc extérieur 91 est, de préférence, situé dans la continuité d'aspect (c'est-à-dire ici à l'aplomb) de la face extérieure 31 de la feuille de verre extérieure 3, c'est-à-dire dans la continuité d'aspect de la face extérieure 21 de la vitre extérieure 2, qui est aussi la face extérieure 101 du vitrage 1.

Un joint d'étanchéité extérieur 99, de préférence creux, est situé dans un espace d'applique 95 entre, avec de préférence un contact,
- d'une part le bord du flanc extérieur 91 et la traverse 90
- et d'autre part le chant 20 de la vitre extérieure 2 (cas de la vitre extérieure monolithique) ou d'autre part, comme ici, le chant 30 de la feuille de verre extérieure 3
- tout en étant de préférence au contact d'un bord de la face intermédiaire 22 de la vitre extérieure 2 (cas de la vitre extérieure monolithique) ou au contact, comme ici, d'un bord d'une face intermédiaire 32 de la feuille de verre extérieure 3.

Pour réaliser ce dernier contact, le joint d'étanchéité extérieur 99 présente, de préférence, une lèvre d'appui 109.

Le joint d'étanchéité extérieur 99 est affleurant avec la face extérieure 31 de la feuille de verre extérieure et ne s'étend pas plus à l'extérieur que cette face extérieure 31. Il fait de préférence tout le tour de vitrage en étant d'un seul tenant.

Le joint d'étanchéité extérieur 99 présente de préférence une hauteur h comprise entre 5,0 et 30,0 mm, de préférence entre 8,0 et 20,0 mm, par exemple de 18,0 mm.

Le joint d'étanchéité extérieur 99 ne remplit de préférence pas tout l'espace entre le flanc extérieur 91 et le chant 20 de la vitre extérieure 2 afin qu'il soit facile à retirer pour accéder à la tête 105.

Il a été vérifié qu'une isolation thermique adéquate est obtenue sur la base de l'exemple de la figure 1, lorsque ladite cavité de vitrage 8 est d'un seul tenant, qu'elle est remplie d'argon et présente une épaisseur uniforme. La distance entre la face extérieure 101 et la face intérieure 102 est ainsi constante et est ici de 26,76 mm.

La fixation selon l'invention comporte de préférence plusieurs ailes 12 latérales qui s'étendent toute en direction centripète, c'est-à-dire vers un axe central vertical du vitrage pour les ailes latérales s'étendant horizontalement lorsque leurs verrous sont fermés et vers un axe central horizontal du vitrage pour les ailes latérales s'étendant verticalement lorsque leurs verrous sont fermés.

Il a été vérifié qu'une tenue mécanique appropriée est obtenue sur la base de l'exemple de la figure 1 lorsque le vitrage 1 est soumis à des conditions similaires à celles qu'il subirait s'il était intégré dans un train roulant à 160 km/h.

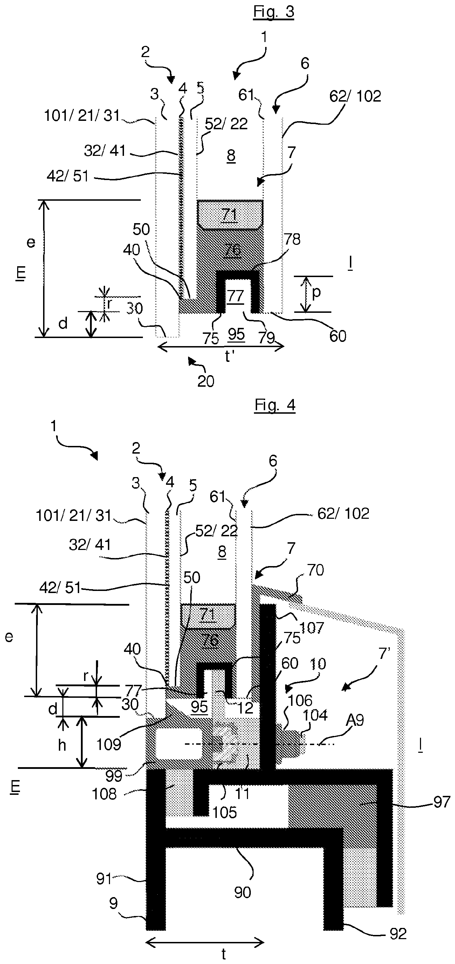

Dans un premier mode de réalisation illustré aux figures 2 et 3, la structure de cadre de vitrage comporte uniquement une partie de cette structure interne 7 et qui est située en périphérie interne de la vitre extérieure 2 et en périphérie interne de la vitre intérieure 6 en étant plus vers le centre (plus centripète) que le chant périphérique 20, 60 respectivement de la vitre extérieure 2 et de la vitre intérieure 6, et qui tient ces deux vitres ensemble de telle sorte que le vitrage réalise une séparation entre l'espace extérieur E et l'espace intérieur I avec une cavité de vitrage 8 située entre les vitres 2, 6 ; sans partie de cette structure externe.

Dans le premier mode de réalisation, l'aile 12 latérale du verrou 10 pénètre dans la cavité d'accrochage 77 par rotation simple et directe du verrou à 90° sur lui-même.

Dans un premier mode de réalisation illustré aux figures 2 et 3, lorsque le vitrage est fixé à la baie, le flanc intérieur 92 s'étend en direction centripète, plus centripète que le chant 60 de la vitre intérieure 6 et elle présente un trou de fixation 93 qui est situé plus centrifuge que le chant 60 de la vitre intérieure 6 ; ce trou de fixation 93 présente un axe A9 parallèle au chant 60 de ladite vitre intérieure 6 ; c'est-à-dire horizontal.

Dans ce premier mode de réalisation, le verrou 10 est fixé directement au flanc intérieur 92 par un moyen de fixation 104, comme par exemple un boulon présentant une tête 105, et de l'autre côté du flanc intérieur 92 par un écrou 106. Ce boulon passe par le trou de fixation 93 et la tête 105 se trouve ainsi dans l'espace d'applique 95. Le verrou 10 présente un corps 11, cylindrique, creux, orienté horizontalement à l'intérieur duquel passe librement le moyen de fixation 104 et une aile 12 latérale (et de préférence comporte une seule aile latérale) s'étendant à partir du corps 11 en direction du centre du vitrage à l'état fixé, à l'intérieur de la cavité d'accrochage 77 et en vis-à-vis d'un bord de la face intermédiaire 61 de la vitre intérieure 6.

Le flanc intérieur 92 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6. Il est de préférence préfabriqué puis collé contre le bord de la face intérieure 62.

La fixation selon l'invention du vitrage 1 illustré en figure 2 est particulièrement compacte selon son épaisseur car l'épaisseur totale t de cette fixation est de 34,76 mm, de la face extérieure 101, 21 au flanc intérieur 92 en intégrant l'épaisseur du vitrage et du flanc.

Dans un second mode de réalisation, illustré à la figure 4, la structure de cadre de vitrage comporte :
- d'une part une partie de structure interne 7, comme décrit pour la première variante, et qui est située en périphérie interne de la vitre extérieure 2 et en périphérie interne de la vitre intérieure 6 en étant plus vers le centre que le chant périphérique 20, 60 respectivement de la vitre extérieure et de la vitre intérieure (plus centripète), et qui tient ces deux vitres ensemble de telle sorte que le vitrage réalise une séparation entre l'espace extérieur et l'espace intérieur avec une cavité de vitrage 8 située entre les vitres 2, 6,
- et d'autre part une structure externe 7' qui s'étend en périphérie externe de la vitre extérieure 2 et/ou en périphérie externe de la vitre intérieure 6 en étant plus loin (plus centrifuge) que le chant périphérique 20, 60 respectivement de la vitre extérieure 2 et/ou de la vitre intérieure 6 en partant du centre de la vitre.

Ici, la structure externe 7' présente en coupe transversale sensiblement la forme d'un h, avec un corps 107 et deux pieds qui s'étendent plus centrifuge à partir du corps, le pied extérieur étant plus court que le pied intérieur.

Dans ce second mode de réalisation, le verrou 10 est fixé indirectement au flanc intérieur 92 : le verrou 10 est fixé directement à la structure externe 7' par l'intermédiaire d'un moyen de fixation 104, comme par exemple un boulon présentant une tête 105, et par un écrou 106. Ce boulon passe par un trou de fixation 93 situé dans le corps 107 et la tête 105 se trouve ainsi dans l'espace d'applique 95.

Le verrou 10 présente un corps 11, cylindrique, creux, orienté horizontalement à l'intérieur duquel passe librement le moyen de fixation 104 et une aile 12 latérale (et de préférence comporte une seule aile latérale) s'étendant à partir du corps 11 en direction du centre du vitrage à l'état fixé, à l'intérieur de la cavité d'accrochage 77 et en vis-à-vis d'un bord de la face intermédiaire 61 de la vitre intérieure 6.

Dans ce second mode de réalisation, la structure externe 7' est par ailleurs fixée au flanc intérieur 92 par collage à l'aide d'un ruban de colle 97, éventuellement complété d'un joint ou d'un ruban de colle 108 situé entre le pied extérieur de la structure externe 7' et le flanc extérieur 91.

La structure externe 7', visible en figure 4, est une structure externe légère dans le sens où elle s'étend de préférence uniquement en périphérie externe de la vitre intérieure 6 en étant plus loin que le chant périphérique 60 de la vitre intérieure en partant du centre de la vitre (plus centrifuge) ; elle est aussi en périphérie externe de la cavité de vitrage 8 en étant plus loin que cette cavité de vitrage en partant du centre de la vitre (plus centrifuge), mais elle ne s'étend pas en périphérie externe de la vitre extérieure 2 en étant plus loin que le chant périphérique 20 de la vitre extérieure en partant du centre de la vitre.

En outre, la structure externe 7' est une structure externe légère dans le sens où, de préférence, elle ne s'étend pas plus vers le centre de la vitre interne 6 (plus centripète) que l'espaceur 71 afin que le clair de vitrage soit le plus grand possible.

Le corps 107 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6.

En figure 4 ci-après, l'épaisseur totale t de la fixation est aussi de 34,76 mm de la face extérieure 101, 21 au flanc intérieur 92 en intégrant l'épaisseur du vitrage et du flanc.

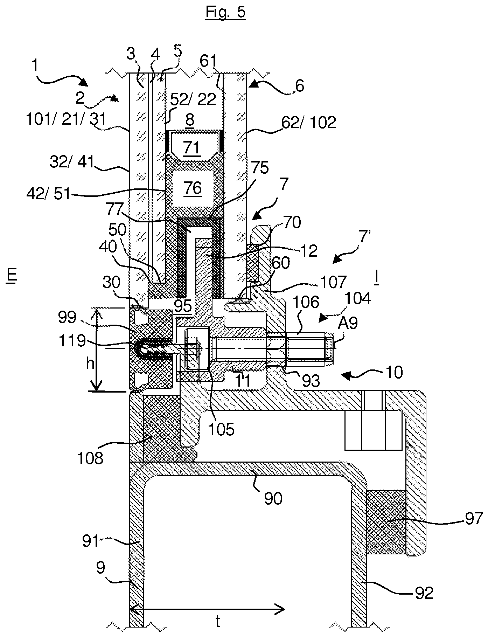

Dans un troisième mode de réalisation, illustré à la figure 5, le vitrage 1 présente la même structure que ceux du premier et du second mode de réalisation et la fixation est similaire au second mode, avec une structure externe 7' qui s'étend en périphérie externe de la vitre intérieure 6 en étant plus loin (plus centrifuge) que le chant périphérique 60.

Dans ce troisième mode de réalisation, le joint d'étanchéité extérieur 99 ne comporte pas de lèvre d'appui 109. Il est attaché à la tête 105 par une vis 119 s'étendant en direction de l'espace extérieur E.

Bien que cela ne soit pas illustré, la vitre extérieure 2 pourrait être aussi grande que la vitre intérieure 6, à la fois en longueur, selon l'axe X et en hauteur selon l'axe Y.

Bien que cela ne soit pas illustré, le chant 20 de la vitre extérieure 2 ou le chant 50 de la feuille de verre intérieure 5 peut comporter une lèvre centrifuge en matière plastique qui s'étend, dans l'espace d'applique 95, en direction de la traverse 90.

Dans les trois modes de réalisation, l'état fixé du vitrage est atteint par la rotation à 90° du verrou 10 sur lui-même, autour de l'axe du trou de fixation 93.

Pour une fixation correcte du vitrage, il est préférable d'utiliser plusieurs verrous et notamment plusieurs verrous le long de chaque bord du vitrage. L'intervalle i entre deux verrous adjacents est de préférence compris entre 100,0 et 400,0 mm, de préférence encore entre 200,0 et 300,0 mm.

Dans les trois modes de réalisation, la vitre extérieure 2 est plus grande que la vitre intérieure 6, à la fois en longueur, selon l'axe X et en hauteur selon l'axe Y afin de permettre de cacher une partie du verrou 10 derrière un bord périphérique de la vitre extérieure 2. Plus précisément ici, la feuille de verre extérieure 3 est plus grande que la vitre intérieure 6, à la fois en longueur, selon l'axe X et en hauteur selon l'axe Y. Cela permet de cacher une partie du verrou 10 derrière un bord périphérique de cette feuille de verre extérieure.

Ainsi, le chant 30 de ladite feuille de verre extérieure 3 est situé en débord d, centrifuge, du chant 60 de la vitre intérieure 6 le long d'une partie au moins de la longueur du chant 30 de ladite feuille de verre extérieure 3 et de préférence le long de la totalité de la longueur du chant 30 (c'est-à-dire le long de la totalité de la périphérie du chant 30) de la feuille de verre extérieure 3 ; si la vitre extérieure 2 était monolithique (et non feuilletée), ce pourrait être le chant 20 de la vitre extérieure qui serait situé en débord.

Ainsi, lorsque la vitre extérieure 2 est observée de face, le débord d est de préférence présent tout autour de la vitre extérieure 2 : le chant 30 de la feuille de verre extérieure 3 s'étend plus loin, en direction opposée au centre de la vitre extérieure 2, que le chant 60 de la vitre intérieure 6. Ce débord d est de préférence constant le long d'un bord longitudinal ou latéral considéré ; il est de préférence identique le long de chacun des bords longitudinaux et latéraux de la vitre extérieure 2.

Le débord d est de préférence compris 5,0 et 30,0 mm, et de préférence entre 8,0 et 20,0 mm ; il est ici de 13,0 mm.

Ce débord d peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée).

Dans ces trois modes de réalisation, en outre et indépendamment du débord d ci-avant, la feuille de verre intérieure 5 est plus petite que la vitre intérieure 6, à la fois en longueur, selon l'axe X et en hauteur selon l'axe Y.

Lorsque la vitre extérieure 2, feuilletée, est considérée en coupe, le chant 50 de la feuille de verre intérieure 5 est situé en retrait r, centripète, du chant 30 de la feuille de verre extérieure 3 sur une partie au moins de la longueur du chant 50 de la feuille de verre intérieure 5 et de préférence sur la totalité de la longueur du chant 50 de la feuille de verre intérieure 5.

Ainsi, lorsque la vitre extérieure 2 est observée de face, le retrait r est de préférence présent tout autour de la vitre extérieure 2 : le chant 50 de la feuille de verre intérieure 5 est plus vers le centre de la vitre extérieure 2 que le chant 60 de la vitre intérieure 6. Ce retrait r est de préférence constant le long d'un bord longitudinal ou latéral considéré ; il est de préférence identique le long de chacun des bords longitudinaux et latéraux de la vitre extérieure 2.

Le retrait r est de préférence compris entre 1,0 et 10,0 mm, et de préférence entre 2,0 et 8,0 mm ; il est ici de 5,0 mm.

Ce retrait r peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée).

En figures 2 à 5, l'ouverture du rail 75, et ainsi l'ouverture de la cavité d'accrochage 77, en direction centrifuge est dans le prolongement uniquement du chant 60 de la vitre intérieure 6.

En figures 2 à 5, le cordon de mastic 76 remplit de préférence tout l'espace en direction transversale entre la face intérieure 62 de la vitre intérieure 6 et la face 52 de la feuille de verre intérieure 5, en s'étendant en outre au contact du chant 50 de cette feuille de verre intérieure 5, du chant 40 de la feuille de matière plastique 4, et de la face 32 de la feuille de verre extérieure 3 mais sans s'étendre jusqu'au chant 30.

Sur ces figures 2 à 5, le cordon de mastic 76 remplit de préférence tout l'espace en hauteur entre d'une part l'espaceur 71 et d'autre part l'arête entre le chant 60 et la face 61.

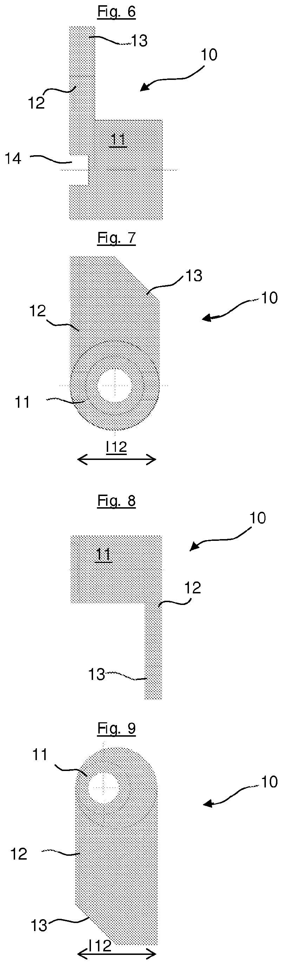

Les figures 6 et 7 illustrent un verrou 10 à rotation centrée : le corps 11 du verrou est un cylindre creux percé d'un tube cylindrique coaxial avec l'axe du cylindre du corps, pour le passage du moyen de fixation 104.

Ces figures montrent en particulier que l'aile 12 du verrou peut présenter un chanfrein 13, par exemple à 45°, afin de faciliter son passage dans la cavité d'accrochage 77 et venir au contact, ou quasiment au contact, du fond 78.

L'aile présente ici une largeur l12 de 13,0 mm. La longueur entre l'axe du verrou et l'extrémité de l'aile 12 est d'environ 26 mm.

L'aile 12 pénètre ici dans la cavité d'accrochage 77 sur toute la hauteur intérieure du rail 75, c'est-à-dire sur une hauteur d'environ 7 mm.

Le verrou 10 comporte en outre une cavité centrale 14, circulaire, dans laquelle pénètre un appendice de forme complémentaire et appartenant au joint d'étanchéité extérieur 99 afin de participer au maintien ce joint d'étanchéité extérieur 99 en position.

Dans un autre mode de réalisation, l'aile 12 latérale du verrou 10 pénètre dans la cavité d'accrochage 77 par rotation excentrée du verrou à 90° sur lui-même.

Cette rotation est excentrée afin que ladite aile s'éloigne de l'axe A9 du trou de fixation 93 lors du mouvement de pénétration de l'aile 12 dans la cavité d'accrochage.

Cette rotation excentrée peut être réalisée en prévoyant d'une part une rondelle ovale entre le corps 11 du verrou et le flanc intérieur 92 et d'autre part un évidement cylindrique dans la paroi du corps 11 qui est en vis-à-vis.

Les figures 8 et 9 illustrent un verrou 10 à rotation excentrée, identique au précédant sauf en ce que, pour le passage du moyen de fixation 104, le corps 11 est un cylindre creux percé d'un tube cylindrique qui n'est pas coaxial avec l'axe du cylindre du corps : l'axe du tube cylindrique est décalé latéralement par rapport à l'orientation longitudinale de l'aile 12.

Dans les trois variantes de réalisation du verrou présentées ci-avant en lien avec les figures 2 à 5, l'aile 12 latérale de chaque verrou est venue de matière avec le corps 11.

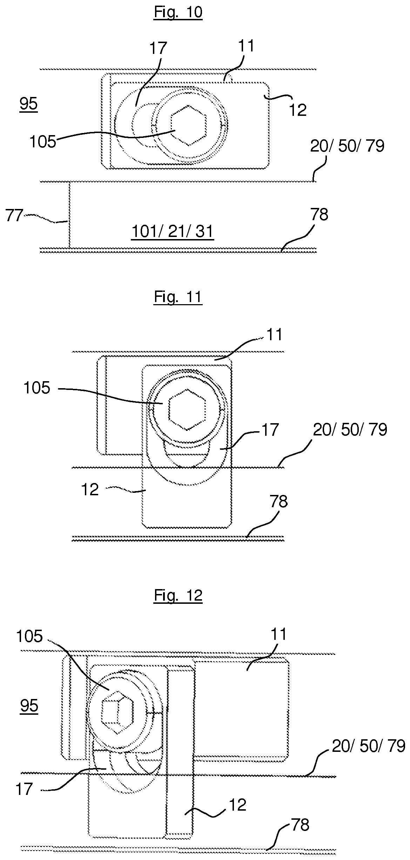

Les figures 10 à 12 illustrent un mode particulier de réalisation du verrou dans laquelle l'aile 12 est séparée du corps 11 (ou distincte de ce corps 11).

Cette aile 12 présente en outre, de préférence, une réservation 17 oblong qui accueille la tête 105 du moyen de fixation.

La figure 10 illustre l'aile 12 avant son positionnement dans la cavité d'accrochage. L'aile 12 est intégralement dans l'espace d'applique 95.

La figure 11 illustre l'aile 12 positionnée dans la cavité d'accrochage, après une rotation à 90°.

La figure 12 est une vue identique à la figure 11, mais en perspective.

Ce mode particulier permet de maintenir l'aile 12 en position allongée le long de l'espace d'applique 95, comme visible en figure 10, le temps d'introduire ou de retirer le vitrage 1 (par exemple s'il a été cassé pendant l'usage du moyen de transport) dans ou hors de la baie 9.

Dans ce mode particulier, il n'y a que de ladite aile 12 latérale qui est animée d'une rotation à 90° ; le reste du verrou, et en particulier le corps 11, est immobile.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

En particulier, il est inclus dans la présente invention que la vitre intérieure 6 peut elle-même être feuilletée.

## Revendications

1. Système de fixation d'un vitrage (1) latéral d'un moyen de transport, en particulier un vitrage de train, à une baie (9) périphérique, ledit système comprenant un vitrage et ledit vitrage étant un vitrage multiple, fixe, présentant une face extérieure (101) qui fait face à un espace extérieur (E) et une face intérieure (102) qui fait face à un espace intérieur (I), ladite face extérieure (101) du vitrage étant en continuité d'aspect avec un flanc extérieur (91) de ladite baie (9) sur toute sa périphérie,
ledit vitrage (1) comprenant :
- une vitre extérieure (2) présentant une face extérieure (21) qui fait face à l'espace extérieur (E), un chant (20) périphérique et une face intermédiaire (22) à l'opposé de la face extérieure (21), ladite vitre extérieure (2) étant de préférence feuilletée et comprenant alors au moins une feuille de verre extérieure (3), une feuille de verre intérieure (5), ainsi qu'une feuille de matière plastique (4) située entre ladite feuille de verre extérieure (3) et ladite feuille de verre intérieure (5), chaque feuille (3, 4, 5) de ladite vitre extérieure (2) présentant un chant (30, 40, 50) périphérique,
- une vitre intérieure (6) ayant une face intérieure (62) qui fait face à l'espace intérieur (I), une face intermédiaire (61) à l'opposé de la face intérieure, ainsi qu'un chant périphérique (60),
- une structure interne (7) qui est située en périphérie interne de ladite vitre extérieure (2) et en périphérie interne de ladite vitre intérieure (6) en étant au moins en partie plus vers le centre que le chant périphérique (20, 60) respectivement de ladite vitre extérieure (2) et de ladite vitre intérieure (6), et qui tient ces deux vitres ensemble de telle sorte que le vitrage réalise une séparation entre ledit espace extérieur et ledit espace intérieur avec une cavité de vitrage (8) située entre lesdites vitres (2, 6),ladite structure interne (7) comportant une cavité d'accrochage (77) présentant un fond (78) centripète et une ouverture (79) centrifuge,
***caractérisé* en ce que** ladite baie (9) comporte un verrou (10) qui est fixé à ladite baie et est situé plus centrifuge que le chant (60) de ladite vitre intérieure (6), ledit verrou (10) présentant une aile (12) latérale s'étendant à l'intérieur de ladite cavité d'accrochage (77) et en vis-à-vis d'un bord de ladite face intermédiaire (61) de la vitre intérieure (6) par rotation à 90° de ladite aile (12) latérale **et en ce qu'**un joint d'étanchéité extérieur (99), de préférence creux, est situé dans un espace d'applique (95) entre d'une part ledit flanc extérieur (91) et d'autre part le chant (20) de ladite vitre extérieure (2) ou d'autre part le chant (30) de ladite feuille de verre extérieure (3).

2. Système selon la revendication 1, dans lequel ladite cavité d'accrochage (77) est formée par une rainure localisée ou un rail (75) allongé.

3. Système selon la revendication 1 ou 2, dans lequel le chant (20) de ladite vitre extérieure (2) ou le chant (30) de ladite feuille de verre extérieure (3) est situé en débord (d) centrifuge du chant (60) de ladite vitre intérieure (6) le long d'une partie au moins de la longueur du chant (20, 30) de ladite vitre extérieure (2) ou de ladite feuille de verre extérieure (3) et de préférence le long de la totalité de la longueur du chant (20, 30) de ladite vitre extérieure (2) ou de ladite feuille de verre extérieure (3).

4. Système selon la revendication 3, dans lequel ledit débord (d) est compris entre 5,0 et 30,0 mm, et de préférence entre 8,0 et 20,0 mm.

5. Système selon l'une quelconque des revendications 1 à 4, dans lequel ledit chant (40) de ladite feuille de matière plastique (4) et/ou ledit chant (50) de ladite feuille de verre intérieure (5) est (ou sont) situé(s) en retrait (r) centripète du chant (60) de ladite vitre intérieure (6) le long d'une partie au moins de la longueur du chant (40, 50) de ladite feuille de matière plastique (4) et/ou de ladite feuille de verre intérieure (5) et de préférence le long de la totalité de la longueur du chant (40, 50) de ladite feuille de matière plastique (4) et/ou de ladite feuille de verre intérieure (5).

6. Système selon la revendication 5, dans lequel ledit retrait (r) est compris entre 1,0 et 10,0 mm, et de préférence entre 2,0 et 8,0 mm.

7. Système selon l'une quelconque des revendications 1 à 6, dans lequel ladite rotation est excentrée afin que ladite aile (12) s'éloigne d'un axe (A9) d'un trou de fixation (93) du verrou lors du mouvement de pénétration de ladite aile (12) dans ladite cavité d'accrochage (77).

8. Système selon l'une quelconque des revendications 1 à 7, dans lequel le chant (20) de ladite vitre extérieure (2) ou le chant (50) de ladite feuille de verre intérieure (5) comporte une lèvre centrifuge en matière plastique.

9. Système selon l'une quelconque des revendications 1 à 8, dans lequel ledit joint d'étanchéité extérieur (99) est présent au contact entre d'une part un bord dudit flanc extérieur (91) de la baie (9) et d'autre part le chant (20) de ladite vitre extérieure (2) ou le chant (30) de ladite feuille de verre extérieure (3), ledit joint d'étanchéité extérieur (99) présentant de préférence une hauteur (h) comprise entre 5,0 et 30,0 mm, et de préférence entre 8,0 et 20,0 mm.

10. Système selon l'une quelconque des revendications 1 à 9, dans lequel un cordon de joint d'étanchéité intérieur (70) est présent au contact entre d'une part ladite face intérieure (62) de la vitre intérieure (6) et d'autre part un flanc intérieur (92) de la baie (9) ou d'autre part un corps (107) d'une structure externe (7').

11. Système selon l'une quelconque des revendications 1 à 10, dans lequel ledit joint d'étanchéité extérieur (99) est au contact d'un bord de ladite face intermédiaire (22) de la vitre extérieure (2) ou d'un bord d'une face intermédiaire (32) de ladite feuille de verre extérieure (3).

## Patentansprüche

1. System zum Befestigen einer Seitenverglasung (1) eines Transportmittels, insbesondere einer Zugverglasung, an einer Umfangsöffnung (9), das System umfassend eine Verglasung und wobei die Verglasung eine feste Mehrfachverglasung ist, die eine äußere Fläche (101), die einem äußeren Raum (E) gegenüberliegt, und eine innere Fläche (102), die einem inneren Raum (I) gegenüberliegt, aufweist, wobei die äußere Fläche (101) der Verglasung über ihren gesamten Umfang mit einer äußeren Flanke (91) der Öffnung (9) optisch zusammenhängend ist,
die Verglasung (1) umfassend:
- eine äußere Scheibe (2), die eine äußere Fläche (21), die dem äußeren Raum (E) gegenüberliegt, eine Umfangskante (20) und eine Zwischenfläche (22) gegenüber der äußeren Fläche (21) aufweist, wobei die äußere Scheibe (2) vorzugsweise laminiert ist und dann mindestens eine äußere Glasscheibe (3), eine innere Glasscheibe (5) sowie eine Kunststoffscheibe (4) umfasst, die zwischen der äußeren Glasscheibe (3) und der inneren Glasscheibe (5) angeordnet ist, wobei jede Scheibe (3, 4, 5) der äußeren Scheibe (2) eine Umfangskante (30, 40, 50) aufweist,
- eine innere Scheibe (6), die eine innere Fläche (62), die dem inneren Raum (I) gegenüberliegt, eine Zwischenfläche (61) gegenüber der inneren Fläche sowie eine Umfangskante (60) besitzt,
- eine Innenstruktur (7), die an dem Innenumfang der äußeren Scheibe (2) und an dem Innenumfang der inneren Scheibe (6) angeordnet ist, wobei sie mindestens teilweise weiter zur Mitte als die Umfangskante (20, 60) der äußeren Scheibe (2) beziehungsweise der inneren Scheibe (6) liegt, und die diese zwei Scheiben zusammenhält, sodass die Verglasung eine Trennung zwischen dem äußeren Raum und dem inneren Raum mit einem Verglasungshohlraum (8) erfährt, der sich zwischen den Scheiben (2, 6) befindet, wobei die Innenstruktur (7) einen Einhakhohlraum (77), der einen zentripetalen Boden (78) und eine zentrifugale Mündung (79) aufweist, vorweist,
**dadurch gekennzeichnet, dass** die Öffnung (9) eine Verriegelung (10) vorweist, die an der Öffnung befestigt ist und zentrifugaler als die Kante (60) der inneren Scheibe (6) angeordnet ist, wobei die Verriegelung (10) einen Seitenflügel (12) aufweist, der sich innerhalb des Einhakhohlraums (77) und gegenüber eines Rands der Zwischenfläche (61) der inneren Scheibe (6) durch Drehung des Seitenflügels (12) um 90° erstreckt, und dass eine äußere Abdichtung (99), vorzugsweise hohl, in einem Anbringungsraum (95) zwischen einerseits der äußeren Flanke (91) und andererseits der Kante (20) der äußeren Scheibe (2) oder andererseits der Kante (30) der äußeren Glasscheibe (3) angeordnet ist.

2. System nach Anspruch 1, wobei der Einhakhohlraum (77) durch eine lokalisierte Nut oder eine langgestreckte Schiene (75) ausgebildet ist.

3. System nach Anspruch 1 oder 2, wobei die Kante (20) der äußeren Scheibe (2) oder die Kante (30) der äußeren Glasscheibe (3) an dem Zentrifugalüberhang (d) der Kante (60) der inneren Scheibe (6) entlang mindestens eines Teils der Länge der Kante (20, 30) der äußeren Scheibe (2) oder der äußeren Glasscheibe (3) und vorzugsweise entlang der gesamten Länge der Kante (20, 30) der äußeren Scheibe (2) oder der äußeren Glasscheibe (3) angeordnet ist.

4. System nach Anspruch 3, wobei der Überhang (d) zwischen 5,0 und 30,0 mm und vorzugsweise zwischen 8,0 und 20,0 mm beträgt.

5. System nach einem der Ansprüche 1 bis 4, wobei die Kante (40) der Kunststofffolie (4) und/oder die Kante (50) der inneren Glasplatte (5) in zentripetaler Rücksetzung (r) von der Kante (60) des inneren Glases (6) entlang mindestens eines Teils der Länge der Kante (40, 50) der Kunststofffolie (4) und/oder der inneren Glasscheibe (5) und vorzugsweise entlang der gesamten Länge der Kante (40, 50) der Kunststofffolie (4) und/oder der inneren Glasscheibe (5) angeordnet ist/sind.

6. System nach Anspruch 5, wobei die Zurücksetzung (r) zwischen 1,0 und 10,0 mm und vorzugsweise zwischen 2,0 und 8,0 mm beträgt.

7. System nach einem der Ansprüche 1 bis 6, wobei die Drehung exzentrisch ist, damit der Flügel (12) sich von einer Achse (A9) eines Befestigungslochs (93) der Verriegelung während der Eindringungsbewegung des Flügels (12) in den Einhakhohlraum (77) entfernt.

8. System nach einem der Ansprüche 1 bis 7, wobei die Kante (20) der äußeren Scheibe (2) oder die Kante (50) der inneren Glasscheibe (5) eine Zentrifugallippe aus Kunststoffmaterial vorweist.

9. System nach einem der Ansprüche 1 bis 8, wobei die äußere Abdichtung (99) an dem Kontakt zwischen einerseits einem Rand der äußeren Flanke (91) der Öffnung (9) und andererseits der Kante (20) der äußeren Scheibe (2) oder der Kante (30) der äußeren Glasscheibe (3) vorhanden ist, wobei die äußere Abdichtung (99) vorzugsweise eine Höhe (h) zwischen 5,0 und 30,0 mm und vorzugsweise zwischen 8,0 und 20,0 mm umfasst.

10. System nach einem der Ansprüche 1 bis 9, wobei ein Wulst der inneren Abdichtung (70) in dem Kontakt zwischen einerseits der inneren Fläche (62) der inneren Scheibe (6) und andererseits einer inneren Flanke (92) der Öffnung (9) oder andererseits einem Körper (107) einer äußeren Struktur (7') vorhanden ist.

11. System nach einem der Ansprüche 1 bis 10, wobei die äußere Abdichtung (99) mit einem Rand der Zwischenfläche (22) der äußeren Scheibe (2) oder einem Rand einer Zwischenfläche (32) der äußeren Glasscheibe (3) in Kontakt steht.

## Claims

1. A system for mounting a side glazed unit (1) of a means of transport, in particular a train glazed unit, in a peripheral opening (9), said system comprising a glazed unit and said glazed unit being a multiple, fixed, glazed unit having an outer face (101) that faces an outer space (E) and an inner face (102) that faces an inner space (I), said outer face (101) of the glazed unit being continuous in appearance with an outer flank (91) of said opening (9) over its entire periphery, said glazed unit (1) comprising:
- an outer glass pane (2) having an outer face (21) that faces the outer space (E), a peripheral edge (20) and an intermediate face (22) opposite the outer face (21), said outer glass pane (2) preferably being laminated and thus comprising at least one outer glass sheet (3), one inner glass sheet (5), as well as a plastic material sheet (4) located between said outer glass sheet (3) and said inner glass sheet (5), each sheet (3, 4, 5) of said outer glass pane (2) having a peripheral edge (30, 40, 50),
- an inner glass pane (6) having an inner face (62) that faces the inner space (I), an intermediate face (61) opposite the inner face, as well as a peripheral edge (60),
- an internal structure (7) that is located on the inner periphery of said outer glass pane (2) and on the inner periphery of said inner glass pane (6), it being at least in part further toward the center than the peripheral edge (20, 60) respectively of said outer glass pane (2) and said inner glass pane (6), and that holds together these two glass panes in such a way that the glazed unit provides a separation between said outer space and said inner space with a glazed unit cavity (8) located between said glass panes (2, 6), said internal structure (7) comprising a connecting cavity (77) having a centripetal bottom (78) and a centrifugal opening (79), ***characterized* in that** said opening (9) comprises a lock (10) that is fixed to said opening and is located more centrifugal than the edge (60) of said inner glass pane (6), said lock (10) having a side wing (12) extending inside said connecting cavity (77) and opposite an edge of said intermediate face (61) of the inner glass pane (6) by a 90° rotation of said side wing (12) **and in that** an outer seal (99), preferably hollow, is located in a mounting space (95) between, on the one hand, said outer flank (91) and, on the other hand, the edge (20) of said outer glass pane (2) or, on the other hand, the edge (30) of said outer glass sheet (3).

2. The system according to claim 1, wherein said connecting cavity (77) is formed by a localized groove or an elongated rail (75).

3. The system according to claim 1 or 2, wherein the edge (20) of said outer glass pane (2) or the edge (30) of said outer glass sheet (3) is located as a centrifugal overhang (d) of the edge (60) of said inner glass pane (6) along at least part of the length of the edge (20, 30) of said outer glass pane (2) or of said outer glass sheet (3) and preferably along the entire length of the edge (20, 30) of said outer glass pane (2) or of said outer glass sheet (3).

4. The system according to claim 3, wherein said overhang (d) is between 5.0 and 30.0 mm, and preferably between 8.0 and 20.0 mm.

5. The system according to any one of claims 1 to 4, wherein said edge (40) of said plastic material sheet (4) and/or said edge (50) of said inner glass sheet (5) is (or are) centripetally set back (r) from the edge (60) of said inner glass pane (6) along at least part of the length of the edge (40, 50) of said plastic material sheet (4) and/or of said inner glass sheet (5) and preferably along the entire length of the edge (40, 50) of said plastic material sheet (4) and/or of said inner glass sheet (5).

6. The system according to claim 5, wherein said setback (r) is between 1.0 and 10.0 mm, and preferably between 2.0 and 8.0 mm.

7. The system according to any one of claims 1 to 6, wherein said rotation is off-center so that said wing (12) moves away from an axis (A9) of a mounting hole (93) of the lock during the penetration movement of said wing (12) in said connecting cavity (77).

8. The system according to any one of claims 1 to 7, wherein the edge (20) of said outer glass pane (2) or the edge (50) of said inner glass sheet (5) comprises a centrifugal lip made of plastic.

9. The system according to any one of claims 1 to 8, wherein said outer seal (99) is found in contact between on the one hand an edge of said outer flank (91) of the opening (9) and on the other hand the edge (20) of said outer glass pane (2) or the edge (30) of said outer glass sheet (3), said outer seal (99) preferably having a height (h) between 5.0 and 30.0 mm, and preferably between 8.0 and 20.0 mm.

10. The system according to any of claims 1 to 9, wherein an inner sealing bead (70) is found in contact between on the one hand said inner face (62) of the inner glass pane (6) and on the other hand an inner flank (92) of the opening (9) or on the other hand a body (107) of an external structure (7').

11. The system according to any one of claims 1 to 10, wherein said outer seal (99) is in contact with an edge of said intermediate face (22) of the outer glass pane (2) or an edge of an intermediate face (32) of said outer glass sheet (3).
